# FASCICULE DE BREVET EUROPEEN

(11) **EP 0 933 629 B1**
(45) Date de publication et mention de la délivrance du brevet: **26.03.2008**
(21) Numéro de dépôt: 99400099.0
(22) Date de dépôt: 15.01.1999
(51) Int. Cl.: G01N 21/45

(54) **Méthode et dispositif de mesure interférentielle de déphasage entre deux faisceaux lumineux issus d'une même source polarisée.**
Interferenzverfahren und Vorrichtung zum Messen der Phasenverschiebung zweier von einer einzelnen polarisierten Quelle ausgehender Lichtstrahlen.
Interference method and apparatus for measuring the phase shift between two light beams emanating from a single polarised source.

(30) Priorité: 28.01.1998 FR 9800931
(43) Date de publication de la demande: 04.08.1999
(73) Titulaire: Institut Français du Pétrole, 92852 Rueil-Malmaison Cedex (FR)
(72) Inventeur: Beauducel, Claude, 60119 Henonville (FR)

(56) Documents cités:
- EP-A- 0 239 487
- WO-A-95/30368
- FR-A- 2 697 336
- US-A- 5 619 329

## Description

La présente invention concerne une méthode et un dispositif de mesure interférentielle de déphasage entre deux faisceaux lumineux issus d'une même source polarisée par la mesure fine du déplacement des franges d'une figure d'interférence entre deux faisceaux lumineux dont l'un subit des variations de phase consécutives à des variations de son indice de réfraction, appliqué notamment à la réfractométrie.

La méthode peut être utilisée dans de nombreux domaines notamment pour déterminer par exemple les variations d'indices de réfraction concomitantes à des variations dans la composition d'un milieu étudié, relativement à un milieu de référence.

La méthode peut être utilisée notamment dans le domaine de la chromatographie liquide à haute performance dite HPLC, qu'elle soit analytique ou préparative, où l'on a besoin de connaître avec une grande précision la composition de mélanges.

### Art antérieur :

Parmi les différents types connus de réfractomètres, on peut citer par exemple ceux qui fonctionnent avec une source monochromatique dont le faisceau est divisé pour traverser parallèlement deux cuves, l'une pour un liquide de référence et l'autre pour le milieu à analyser, et des moyens ensuite pour rassembler les deux faisceaux et éclairer un photodétecteur. Des interférences se produisent du fait de la variation du chemin optique, résultant de la variation de l'indice et l'on mesure les variations d'intensité dues au déplacement des franges d'interférence.

Le brevet français FR 2 596 526 illustre un exemple de détecteur réfractométrique dans lequel chacune des cuves (de référence et de mesure) participe de façon indépendante à un système d'interférométrie, les deux cuves étant alimentées en lumière par la même source. La détection est réalisée par deux photodétecteurs indépendants qui reçoivent donc chacun une intensité lumineuse variant sinusoïdalement en fonction de la différence des indices de réfraction entre la cuve de référence ou la cuve de mesure d'une part et l'air d'autre part. Une calibration individuelle de chacun des photomètres est donc nécessaire. Ce système optique comporte notamment un élément piézo-électrique destiné à faire vibrer un miroir sur lequel se réfléchit une partie du faisceau lumineux issu de la source.

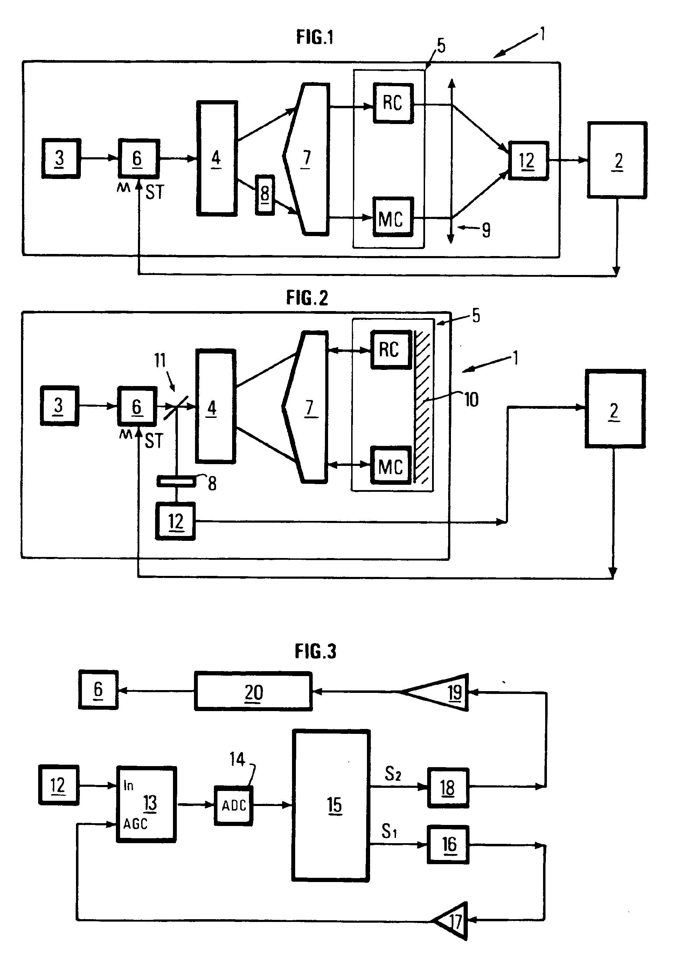

Par le brevet FR 2 697 336, on connaît un refractomètre du type à phase modulée dans lequel on fait interférer deux faisceaux ayant traversé respectivement une cellule de référence et une cellule contenant un milieu dont l'indice de réfraction subit des variations. Les deux faisceaux sont formés à partir d'un faisceau unique émis par un laser après traversée d'une cellule de Pockels à laquelle est appliquée une tension alternative rapide adaptée à faire osciller la figure d'interférence, tel qu'un signal triangulaire (Fig.1) dont la fréquence est de l'ordre de quelques KHz et l'amplitude suffisante pour que l'on puisse obtenir un déplacement supérieur à 1,5 frange (Fig.2). Le résultat sur la figure d'interférence est la superposition d'un mouvement lent lié à la variation de composition du milieu et d'un mouvement oscillatoire plus rapide à la fréquence de la tension alternative. Les variations d'intensité consécutives aux déplacements des franges sont mesurées par un photomètre et appliquées à une électronique de conversion en signaux logiques et de mesure du décalage de phase entre le signal de commande de la cellule et les signaux d'intensité modulés par comptage au moyen d'un signal d'horloge. Quand l'indice de réfraction du milieu ne change pas, le signal de sortie du phototransistor de mesure est celui de la Fig.2.

Le système précédent élimine nombre de sources d'imprécision des systèmes antérieurs du fait que les deux faisceaux interférants sont tous les deux issus de la cellule de Pockels et qu'ils ont donc le même "passé" optique. Cependant, pour plusieurs raisons liées notamment à la méthode utilisée de mesure de décalages de temps entre des fronts de signaux, il s'avère que la précision que l'on peut obtenir (quelques %) peut être jugée insuffisante pour certaines applications, notamment dans le domaine de la chromatographie.

### Définition de l'invention :

La méthode interférentielle selon l'invention permet une amélioration considérable de la précision que l'on peut obtenir dans la mesure de déphasage entre deux faisceaux lumineux issus d'une même source polarisée, lorsque l'un des faisceaux subit une variation relativement lente de phase et un des deux faisceaux est soumis à une modulation périodique relativement rapide de phase par un signal modulant. Elle comporte la mesure fine du déplacement des franges d'une figure d'interférence formée en faisant interférer les deux faisceaux, capté par un photo-détecteur sensible à la variation d'intensité lumineuse résultant du déplacement des franges d'interférence.

La méthode comporte les étapes suivante :
- on asservit la période du signal modulant de façon à ce que sa durée soit sensiblement égale à la durée d'une fenêtre de mesure choisie ;
- on détermine un spectre de fréquence d'une portion d'un signal issu du photo-détecteur, cette portion étant comprise dans la fenêtre de mesure ; et
- on mesure un déphasage affectant une fréquence fondamentale du spectre de fréquence.

De préférence, on ajuste également l'amplitude du signal détecté par le photo-détecteur de manière que le convertisseur analogique-numérique fonctionne toujours à pleine échelle malgré les variations possibles de la transparence de la cellule contenant le milieu étudié.

Pour améliorer encore la précision des résultats, on peut effectuer les mesures de déphasage séparément sur des fractions distinctes du signal de modulation rapide.

Selon la méthode, on peut mesurer le déphasage par un calcul de l'argument complexe de la fréquence fondamentale.

La méthode peut être avantageusement appliquée à des opérations de réfractométrie interférentielle où la modulation lente de phase est consécutive à une variation de l'indice de réfraction d'un milieu.

Selon l'invention, le dispositif de mesure de déphasage entre deux faisceaux lumineux issus d'une même source (3) émettant un faisceau de lumière polarisée, pour la mise en oeuvre de la méthode précitée comportant un ensemble optique comprenant des moyens pour engendrer deux faisceaux à partir d'une même source lumineuse, un premier moyen de déphasage (5) pour appliquer à l'un des deux faisceaux une variation relativement lente de phase et un deuxième moyen de déphasage (6) pour appliquer à l'un des deux faisceaux une modulation périodique relativement rapide de phase, un appareil (1) de formation d'une figure d'interférence comprenant un moyen pour faire interférer les deux faisceaux, un photodétecteur (12) pour détecter le déplacement de franges de la figure d'interférence formée à partir des deux faisceaux.

Ce dispositif comporte en sus :
- un moyen pour ajuster en permanence une période de la modulation périodique de phase relativement rapide, de façon à ce que sa durée soit sensiblement égale à la durée d'une fenêtre de mesure choisie ; et
- un ensemble de mesure (2) incluant des moyens pour déterminer un spectre de fréquence d'une portion d'un signal issu du photo-détecteur mesurée dans la fenêtre de mesure, et cet ensemble de mesure (2) comportant des moyens pour mesurer la variation de phase affectant une composante fondamentale du spectre de fréquence.

Le moyen pour asservir en permanence ladite période (TSW) peut être un moyen de calcul combinant les signes respectifs des phases des harmoniques et le signe de la fréquence fondamentale pour engendrer un signal de correction.

De préférence le dispositif comporte un moyen automatique de réglage du gain d'amplification appliqué aux signaux issus du photo-détecteur.

Le dispositif selon l'invention peut être appliqué à des opérations de réfractométrie interférentielle. Un tel dispositif de réfractométrie interférentielle comporte le dispositif de mesure décrit ci-dessus, dans lequel les moyens pour engendrer deux faisceaux comporte un moyen de division (4) pour diviser le faisceau émis par la source en deux faisceaux. Dans ce dispositif, le premier moyen de déphasage (5) pour soumettre un des faisceaux à une modulation relativement lente de sa phase relativement à celle de l'autre comporte au moins une cellule (MC) contenant un milieu dont l'indice de réfraction varie, le deuxième moyen (6) pour soumettre l'un des deux faisceaux à une modulation relativement rapide de sa phase comporte une cellule adaptée à déphaser la lumière sous l'action d'une tension électrique (ST) périodique de modulation appliquée. De plus, l'ensemble électronique (2) de ce dispositif comporte un calculateur (15) programmé pour effectuer une transformée de Fourier rapide (FFT) sur les signaux issus du détecteur pendant un intervalle de temps (TW) et pour déterminer le déphasage affectant la dite composante fondamentale.

Suivant un mode particulier de réalisation, le dispositif comporte un moyen (14) d'échantillonnage et de numérisation du signal amplifié pendant un intervalle de temps d'acquisition (TW), un générateur (20) d'un signal de commande périodique du deuxième moyen de déphasage. Dans ce mode de réalisation, le calculateur (15) est programmé pour délivrer un premier signal (S1) destiné à contrôler le gain du moyen d'amplification (13), et un deuxième signal (S2) destiné à asservir la période (TSW) du signal produit par le dit générateur (20) à la durée (TW) de l'intervalle de temps d'acquisition. De plus, le calculateur (15) peut être adapté à combiner les signes respectifs des phases des harmoniques et le signe de la fréquence fondamentale pour engendrer un signal de correction.

Le procédé et le dispositif selon l'invention sont avantageux car on a pu vérifier que l'erreur résiduelle dans la mesure de la variation de phase était très réduite, (réduite par un facteur de l'ordre de 20 à 30) par rapport à celle obtenue avec le dispositif précédent.

D'autres caractéristiques et avantages du procédé selon l'invention, apparaîtront à la lecture de la description ci-après d'un exemple non limitatif de réalisation, en se référant aux dessins annexés où :
- la Fig.1 montre un premier exemple de réalisation du dispositif dans une application à la mesure de la variation de l'indice de réfraction d'un mélange transparent dans une cellule par comparaison avec un milieu de référence stable;
- la Fig.2 montre une deuxième exemple de réalisation du dispositif dans la même application de réfractométrie;
- la Fig.3 montre schématiquement l'ensemble électronique de mesure des variations de phase affectant les signaux reçus par le photodétecteur;
- les Fig.4a, 4b montrent respectivement l'amplitude relative Aᵣ des différentes raies n du spectre de fréquence des signaux reçus et leurs phases respectives ϕ exprimées en radians dans un cas où la période de modulation rapide T_{SW} est supérieure à la durée T_{W} de la fenêtre de mesure de ces signaux;
- les Fig.5a, 5b montrent respectivement l'amplitude relative Aᵣ des différentes raies n du spectre de fréquence des signaux reçus et leurs phases respectives ϕ exprimées en radians dans un cas où la période de modulation rapide T_{SW} est inférieure à la durée T_{W} de la fenêtre de mesure de ces signaux;
- la Fig.6 montre un tableau illustratif du calcul effectué pour déterminer le sens d'ajustement de la période de modulation rapide T_{SW} et de la durée T_{W} de la fenêtre selon les signes respectifs S_{F} et S_{H} de la fondamentale F et des harmoniques H;
- la Fig.7 montre la variation (corrigée en permanence) de l'écart Δt que l'on peut relever entre la période de modulation T_{SW} et la durée T_{W} de la fenêtre;
- la Fig.8 montre en fonction du temps la courbe d'ajustement du gain G du préamplificateur suite à un décalage initial de l'ordre de 20%; et
- la Fig.9 montre que l'erreur absolue en pourcentage de la largeur d'une frange ΔI, commise avec la méthode selon l'invention, est contenue dans des limites très étroites.

### Description :

Suivant le mode de mise en oeuvre des Fig. 1, 2, le dispositif comporte un appareil 1 de formation d'une figure d'interférence qui possède par exemple les mêmes fonctionnalités que celui décrit dans le brevet FR 2 596 526 déjà cité et que l'on va rappeler ci-après, ainsi qu'un ensemble de mesure 2 associé.

Cet appareil comprend une source 3 émettant un faisceau de lumière polarisée de préférence cohérente, des moyens de division 4 pour diviser le faisceau émis par la source en deux faisceaux, un premier moyen de modulation lente du déphasage 5, interposé sur le trajet de l'un des deux faisceaux, qui le soumet à une première modulation lente de phase, relativement à l'autre faisceau. Ce moyen 5 est constitué par exemple d'une première cellule MC contenant un mélange transparent à analyser dont l'indice de réfraction change corrélativement à des changements de sa composition, et d'une deuxième cellule RC contenant un autre mélange transparent de composition et donc d'indice de réfraction invariables. Sur le trajet de la lumière issue de la source 3, est interposé un deuxième moyen 6 de déphasage rapide de la phase d'un faisceau, tel qu'une cellule biréfringente de type Pockels par exemple, à laquelle on applique (par l'intermédiaire d'un transformateur non représenté) une tension V de modulation en dents de scie de période T.

Le moyen de séparation 4 de séparation de faisceaux est constitué par exemple d'un prisme séparateur de faisceaux 7 de type Wollaston. La cellule de Pockels 6 et le prisme séparateur 3 sont convenablement orientés l'un par rapport à l'autre et tous les deux par rapport à la direction de polarisation du faisceau issu de la source lumineuse 2, de façon que l'intensité des deux faisceaux soit sensiblement égale et que seul l'un des deux faisceaux soit affecté par la modulation rapide appliqué par la cellule 6. Un moyen est utilisé pour former une figure d'interférence des deux faisceaux issus du premier et du deuxième moyen de déphasage.

Suivant le mode de réalisation de la Fig. 1, ce moyen comporte un prisme biréfringent 7 associée à une lame de polarisation 8 adaptée à remettre les deux faisceaux dans un même plan de polarisation, et à des lentilles convergeantes 9.

Suivant le mode de réalisation de la Fig. 2, le moyen pour former la figure d'interférence des deux faisceaux comporte un miroir 10 (constitué par métallisation des faces arrières des deux cellules MC et RC), une lame semi-réfléchissante 11 disposée entre la cellule bi-réfringeante 6 et le prisme de Wollaston 4, pour renvoyer les faisceaux vers la lame de polarisation 8 et permettre l'interférence des faisceaux.

Un détecteur photosensible 12 est placé en aval des lentilles 9 (Fig. 1) ou en aval de la lame semi-réfléchissante 11 et de la lame de phase 8 (Fig. 2) dans le plan de formation des franges d'interférence entre les deux faisceaux. Il détecte les variations d'intensité lumineuse résultant du déplacement des franges d'interférence concomitant à la modulation lente et le modulation rapide appliquées à l'un ou l'autre des faisceaux interférents.

Il est connecté à l'ensemble électronique de mesure 2 qui est adapté à mesurer les déphasages lents résultant de la variation lente de l'indice de réfraction du milieu à étudier dans la cellule MC et générer un signal d'asservissement du deuxième moyen de modulation 6.

Le principe de la mesure consiste essentiellement, en passant par le biais d'une transformée de Fourier rapide (FFT), à déterminer le spectre de fréquence associé au signal numérisé et à déterminer le déphasage affectant la composante principale (ou fondamentale) complexe du spectre en calculant l'argument de cette composante.

L'ensemble électronique 2 comporte un préamplificateur adaptateur 13 connecté au photo-détecteur 12. Le signal amplifié par le préamplificateur 13, est appliqué à un convertisseur analogique-numérique (ADC) 14 qui l'échantillonne et numérise les échantillons successifs prélevés avec un pas d'échantillonnage déterminé, dans une fenêtre de mesure de durée T.

Les échantillons numérisés sont mémorisés dans un microcalculateur 15 comportant par exemple un processeur de signal numérique (DSP), qui est programmé pour effectuer une transformée de Fourier rapide (FFT) à partir des données numérisées et mesurer le déphasage affectant la composante fondamentale complexe du spectre de fréquence du signal.

Comme on l'expliquera par la suite, le microcalculateur 15 produit un premier signal numérique S1 qui est appliqué à un premier convertisseur numérique analogique 16 (DAC) combiné à un premier diviseur de tension 17. Le signal résultant est appliqué en contre-réaction au préamplificateur 13 sur son entrée de contrôle de gain (AGC). Le signal de sortie du photo-détecteur ayant une amplitude qui peut varier notamment en fonction de l'indice de réfraction de l'échantillon à mesurer, on peut ainsi adapter le gain appliqué aux signaux de mesure pour que le convertisseur analogique-numérique 14 fonctionne en permanence à pleine échelle.

De même, le microcalculateur produit un deuxième signal numérique S2 qui est appliqué à un deuxième convertisseur numérique-analogique 17 (DAC) combiné à un deuxième diviseur de tension 19. Le signal résultant est appliqué à une entrée de commande d'un générateur de tension en dent de scie 20 qui produit le signal S_{T} de modulation rapide de la cellule bi-réfringeante 6 (Fig. 1, 2). Il a pour effet d'asservir en permanence la période T_{SW} de la dent de scie exactement à la durée T_{W} de la fenêtre d'échantillonnage du convertisseur 14.

L'asservissement précis est obtenu par un calcul de phase portant sur les phases respectives de la fréquence fondamentale et des harmoniques du spectre de fréquence calculé.

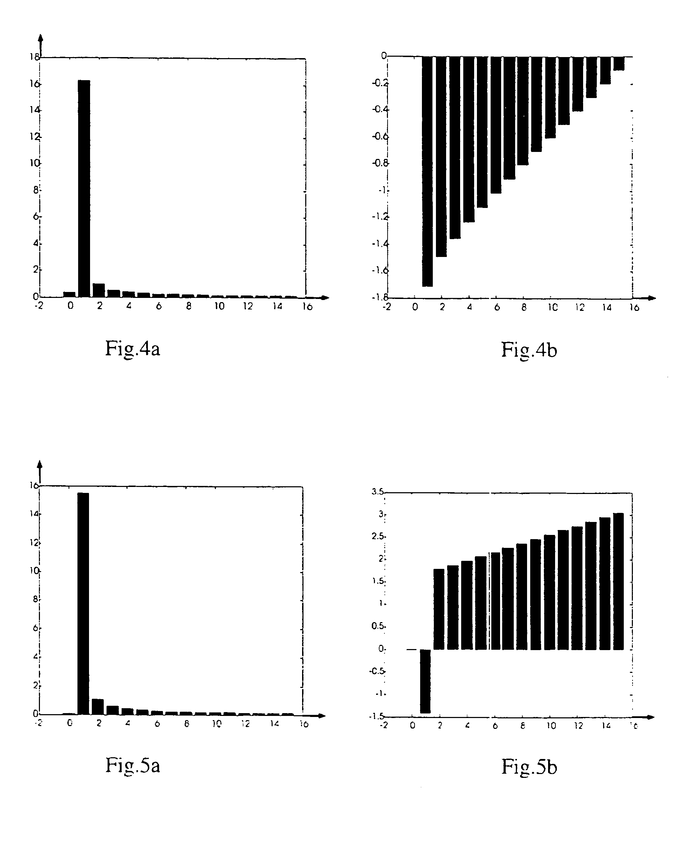

Si l'on détermine par FFT le spectre du signal de mesure issu du photo-détecteur 12 quand sa période T_{ST} est différente de la durée T_{W} de la fenêtre, on observe que a) l'amplitude des différentes raies varie avec l'écart (Fig. 4a, 5a d'une part) et que b) leur phase subit une brusque discontinuité quand l'écart entre elles change de sens, comme l'illustrent les Fig. 4b, 5b.

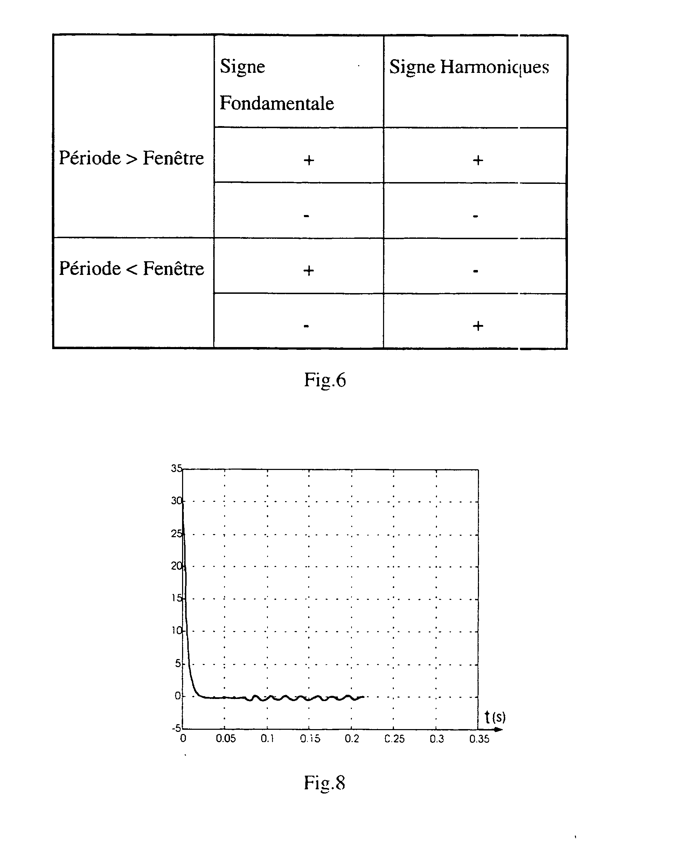

Quand la période T_{ST} est supérieure à la durée T_{W} de la fenêtre (Fig. 4b), la phase des harmoniques est de même sens que celle de la fondamentale, alors qu'elle est de sens contraire quand la période T_{ST} lui est inférieure (Fig. 5b). Une analyse des sens de phase respectifs de la fondamentale et des différents harmoniques se traduit par le tableau de la Fig. 6.

Le changement de signe de la phase des harmoniques se produit pour des erreurs de période très faibles, dépendant de la précision de calcul de la FFT. Par exemple, pour le cas d'une transformée FFT effectuée avec 32 points d'échantillonnage dans la fenêtre T_{W} avec une numérisation à 8 bits, on arrive à détecter une erreur de période relative inférieure à 3.10⁻⁴.

Le signal S1 qui est appliqué à l'entrée de contrôle de gain (AGC) du préamplificateur 13 (Fig. 3) est calculé par le microcalculateur à partir de la valeur du module de la fondamentale, puis intégré numériquement. On voit sur la Fig. 8 l'efficacité de la correction que l'on obtient avec un écart de 20 % du gain initial par rapport au gain optimal.

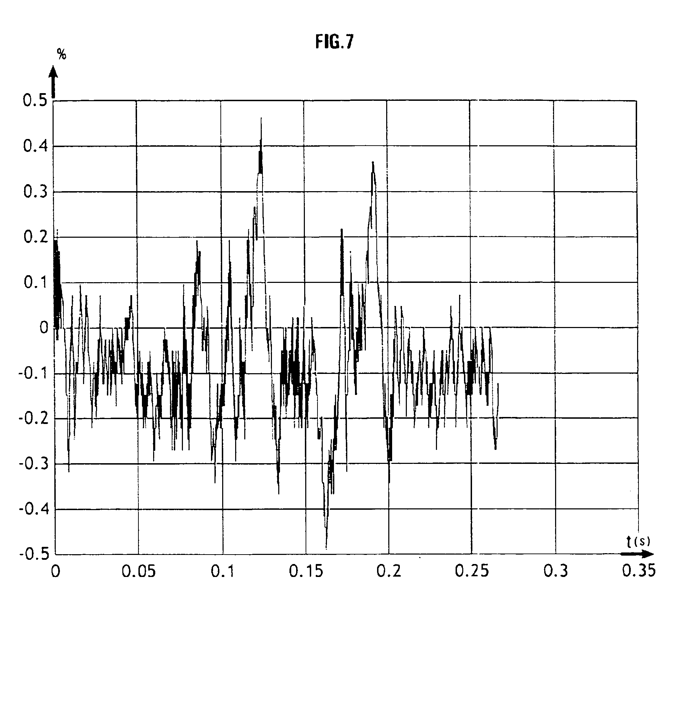

Pour engendrer le signal de correction S2 permettant l'asservissement de la période T_{ST} de la tension en dent de scie, le microcalculateur 15 est adapté à sommer les signes des angles des harmoniques et à multiplier le résultat par le signe de l'angle de la fondamentale. Ces signes sont facilement obtenus en prenant ceux de la partie imaginaire du résultat du calcul de la FFT. Ce signal d'erreur résultant est intégré numériquement et appliqué au convertisseur 18 (Fig. 3) puis au générateur de rampe 20. On voit sur la Fig. 7 l'efficacité de l'asservissement obtenu.

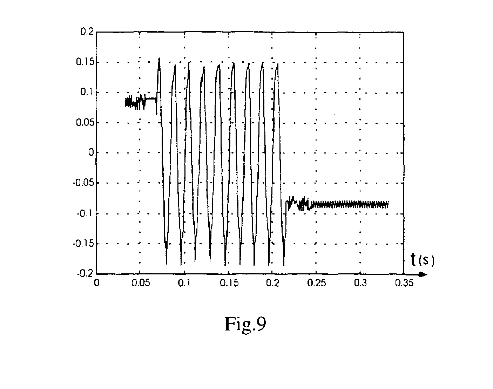

La méthode de mesure de la variation de l'indice de réfraction due à la variation de la composition du milieu dans la cellule de mesure MC, qui est mise en oeuvre par le dispositif, améliore considérablement la précision que l'on peut obtenir, comme en témoigne la Fig. 9. On voit en effet que l'erreur de phase est de l'ordre 0,3% crête à crête en pourcentage de la largeur d'une frange, soit un gain de près de 20 dB (ce qui représente un facteur de l'ordre de 30) par rapport aux résultats de la méthode antérieure, avec une variation quasi sinusoïdale de l'erreur en fonction de la phase fractionnaire.

On constate que le dispositif est beaucoup moins sensible aux perturbations d'origine électrique et aux distorsions du signal puisque la mesure de phase est intégrée sur toute la fenêtre de mesure.

Maintenir la période T_{ST} de la tension électrique de commande qui est appliquée à la cellule bi-réfringeante 6 de Pockels ayant la même durée que la fenêtre T_{W} d'acquisition des signaux de mesure issus du photodétecteur 12, a pour effet positif de diminuer sensiblement l'amplitude de la tension de commande nécessaire et par conséquent, de diminuer les contraintes qu'elle subit.

Le système d'asservissement de gain permet en outre de connaître à tout moment l'amplitude du signal issu du photo-détecteur. On peut donc facilement repérer des anomalies telles que la présence d'impuretés ou de bulles et signaler ainsi une mesure peu fiable.

On peut encore améliorer sensiblement les résultats précédents en calculant séparément les phases fractionnaires mesurées sur les parties "montantes" et "descendantes" du signal d'excitation de la cellule 6 (Fig. 1, 2) et en en faisant la moyenne.

On a décrit des exemples d'application de la méthode à la réfractométrie. On ne sortirait pas du cadre de l'invention toutefois en appliquant la méthode selon l'invention de façon plus générale à la détection fine de déphasages entre des faisceaux interférents.

## Revendications

1. Méthode interférentielle de mesure de déphasage entre deux faisceaux lumineux issus d'une même source polarisée, dans laquelle un des deux faisceaux subit des variations relativement lentes de phase et un des deux faisceaux est soumis à une modulation périodique relativement rapide de phase par un signal modulant, par la mesure fine du déplacement des franges d'une figure d'interférence formée en faisant interférer les deux faisceaux, capté par un photo-détecteur sensible à la variation d'intensité lumineuse résultant du déplacement des franges d'interférence, **caractérisé en ce que** la méthode comporte les étapes suivantes :
- on asservit la période dudit signal modulant de façon à ce que sa durée soit sensiblement égale à la durée d'une fenêtre de mesure choisie ;
- on détermine un spectre de fréquence d'une portion d'un signal issu du photo-détecteur, ladite portion étant comprise dans ladite fenêtre de mesure ;
- on mesure un déphasage affectant une fréquence fondamentale dudit spectre de fréquence.

2. Méthode selon la revendication 1, **caractérisée en ce que** l'on ajuste l'amplitude du signal détecté par le photo-détecteur.

3. Méthode selon l'une des revendications 1 à 2, **caractérisée en ce qu'**elle comporte des mesures de déphasage séparément sur des fractions distinctes du signal de modulation rapide.

4. Méthode selon l'une des revendications 1 à 3, dans laquelle on mesure ledit déphasage par un calcul de l'argument complexe de ladite fréquence fondamentale.

5. Méthode selon l'une des revendications 1 à 4, dans laquelle la modulation lente de phase est consécutive à une variation de l'indice de réfraction d'un milieu.

6. Dispositif de mesure de déphasage entre deux faisceaux lumineux issus d'une même source (3) émettant un faisceau de lumière polarisée, pour la mise en oeuvre de la méthode selon la revendication 1, comportant un ensemble optique comprenant des moyens pour engendrer deux faisceaux à partir d'une même source lumineuse, un premier moyen de déphasage (5) pour appliquer à l'un des deux faisceaux une variation relativement lente de phase et un deuxième moyen de déphasage (6) pour appliquer à l'un des deux faisceaux une modulation périodique relativement rapide de phase, un appareil (1) de formation d'une figure d'interférence comprenant un moyen pour faire interférer les deux faisceaux, un photodétecteur (12) pour détecter le déplacement de franges de la figure d'interférence formée à partir des deux faisceaux, **caractérisé en ce qu'**il comporte en sus :
- un moyen pour asservir en permanence une période (TSW) de ladite modulation périodique de phase relativement rapide, de façon à ce que sa durée soit sensiblement égale à la durée (TW).d'une fenêtre de mesure choisie ; et
- un ensemble de mesure (2) incluant des moyens pour déterminer un spectre de fréquence d'une portion d'un signal issu du photo-détecteur mesurée dans ladite fenêtre de mesure, et ledit ensemble de mesure (2) comportant des moyens pour mesurer la variation de phase affectant une composante fondamentale dudit spectre de fréquence.

7. Dispositif selon la revendication 6, **caractérisé en ce que** le moyen pour asservir en permanence ladite période (TSW) est un moyen de calcul combinant les signes respectifs des phases des harmoniques et le signe de la fréquence fondamentale pour engendrer un signal de correction.

8. Dispositif selon l'une des revendications 6 ou 7, **caractérisé en ce qu'**il comporte un moyen automatique de réglage du gain d'amplification appliqué aux signaux issus du photo-détecteur (12).

9. Dispositif de réfractométrie interférentielle comportant un dispositif de mesure de déphasage selon l'une des revendications 6 à 8, dans lequel lesdits moyens pour engendrer deux faisceaux comporte un moyen de division (4) pour diviser le faisceau émis par la source en deux faisceaux, le premier moyen de déphasage (5) pour soumettre un des faisceaux à une modulation relativement lente de sa phase relativement à celle de l'autre comporte au moins une cellule (MC) contenant un milieu dont l'indice de réfraction varie, le deuxième moyen (6) pour soumettre l'un des deux faisceaux à une modulation relativement rapide de sa phase comporte une cellule adaptée à déphaser la lumière sous l'action d'une tension électrique (ST) périodique de modulation appliquée, et l'ensemble électronique (2) comporte un calculateur (15) programmé pour effectuer une transformée de Fourier rapide (FFT) sur les signaux issus du détecteur pendant un intervalle de temps (TW) et pour déterminer le dit déphasage affectant la dite composante fondamentale.

10. Dispositif selon la revendication 9, **caractérisé en ce qu'**il comporte un moyen (14) d'échantillonnage et de numérisation du signal amplifié pendant un intervalle de temps d'acquisition (TW), un générateur (20) d'un signal de commande périodique du deuxième moyen de déphasage, et dans lequel le calculateur (15) est programmé pour délivrer un premier signal (S1) destiné à contrôler le gain du moyen d'amplification (13), et un deuxième signal (S2) destiné à asservir la période (TSW) du signal produit par le dit générateur (20) à la durée (TW) de l'intervalle de temps d'acquisition.

11. Dispositif selon la revendication 10, **caractérisé en ce que** le calculateur (15) est adapté à combiner les signes respectifs des phases des harmoniques et le signe de la fréquence fondamentale pour engendrer un signal de correction.

## Claims

1. Interferential method for measuring the phase shift between two light beams emanating from one same polarised source, wherein one of the two beams experiences relatively slow phase variations and one of the two beams is subjected to a relatively fast periodic phase modulation by a modulating signal, by the fine measurement of the displacement of the fringes of an interference pattern formed by causing the two beams to interfere, sensed by a photo-detector which is sensitive to the variation of light intensity resulting from the displacement of the interference fringes, **characterised in that** the method includes the following steps:
- slaving the period of said modulating signal such that its duration is substantially equal to the duration of a selected measurement window;
- determining a frequency spectrum of a portion of a signal emanating from the photo-detector, said portion being comprised within said measurement window;
- measuring a phase shift affecting a fundamental frequency of said frequency spectrum.

2. The method according to Claim 1, **characterised in that** the amplitude of the signal detected by the photo-detector is adjusted.

3. The method according to one of Claims 1 to 2, **characterised in that** it includes separate phase shift measurements on distinct fractions of the fast modulation signal.

4. The method according to one of Claims 1 to 3, wherein said phase shift is measured by calculating the complex argument of said fundamental frequency.

5. The method according to one of Claims 1 to 4, wherein the slow phase modulation is consecutive to a variation of the refractive index of a medium.

6. A device for measuring the phase shift between two light beams emanating from one same source (3) emitting a beam of polarised light, to implement the method according to Claim 1, including an optical assembly comprising means for generating two beams from one same light source, a first phase shift means (5) for applying, to one of the two beams, a relatively slow phase variation and a second phase shift means (6) for applying, to one of the two beams, a relatively fast periodic phase modulation, an apparatus (1) for forming an interference pattern comprising a means for causing the two beams to interfere, a photo-detector (12) for detecting the displacement of fringes of the interference pattern formed from the two beams, **characterised in that** it further includes:
- a means for continually slaving one period (TSW) of said relatively fast periodic phase modulation, such that its duration is substantially equal to the duration (TW) of a selected measurement window; and
- a measurement set (2) including means for determining a frequency spectrum of a portion of a signal emanating from the photo-detector measured in said measurement window, and said measurement set (2) including means for measuring the phase variation affecting a fundamental component of said frequency spectrum.

7. The device according to Claim 6, **characterised in that** the means for continually slaving said period (TSW) is a calculation means combining the respective signs of the phases of the harmonics and the sign of the fundamental frequency to generate a correction signal.

8. The device according to one of Claims 6 or 7, **characterised in that** it includes an automatic means for tuning the amplification gain applied to the signals emanating from the photo-detector (12).

9. An interferential refractometry device including a device for measuring phase shift according to one of Claims 6 to 8, wherein said means for generating two beams include a division means (4) for dividing the beam emitted by the source into two beams, the first phase shifting means (5) for subjecting one of the beams to a relatively slow modulation of its phase with respect to that of the other one includes at least one cell (MC) containing a medium with a varying refractive index, the second means (6) for subjecting one of the two beams to a relatively fast modulation of its phase includes one cell adapted to shift the phase of the light under the action of a periodic electric voltage (ST) with applied modulation, and the electronic assembly (2) includes a calculator (15) programmed to perform a Fast Fourier Transform (FFT) on the signals emanating from the detector during a time interval (TW) and to determine said phase shift affecting said fundamental component.

10. The device according to Claim 9, **characterised in that** it includes a means (14) for sampling and digitizing the amplified signal during an acquisition time interval (TW), a generator (20) of a periodic control signal of the second phase shifting means, and wherein the calculator (15) is programmed to deliver a first signal (S1) for controlling the gain of the amplification means (13), and a second signal (S2) for slaving the period (TSW) of the signal produced by said generator (20) to the duration (TW) of the acquisition time interval.

11. The device according to Claim 10, **characterised in that** the calculator (15) is adapted to combine the respective signs of the phases of the harmonics and the sign of the fundamental frequency to generate a correction signal.

## Patentansprüche

1. Verfahren zur Interferenzmessung aus der Phasenverschiebung zweier von einer einzigen polarisierten Quelle ausgehender Lichtstrahlen, bei dem ein modulierendes Signal einen der Strahlen einer verhältnismäßig langsamen Phasenänderung und einen der beiden Strahlen einer verhältnismäßig schnellen periodischen Phasenmodulation unterzieht, durch Feinmessung der Verschiebung der Streifen eines Interferenzbildes zwischen zwei Lichtstrahlen, von denen einer aufgrund von Änderungen seiner Brechzahl Phasenänderungen unterliegt, das durch Interferenz der beiden, von einem auf die durch die Verschiebung der Interferenzstreifen hervorgerufene Lichtintensitätsänderung ansprechenden Fotodetektor erfassten Strahlen, gebildet wird, **dadurch gekennzeichnet, dass** das Verfahren folgenden Schritte umfasst:
- die Periode des modulierenden Signals wird so eingestellt, dass ihre Dauer im Wesentlichen derjenigen eines gewählten Messfensters entspricht;
- es wird ein von dem Fotodetektor abgegebenes Frequenzspektrum eines Signalabschnittes bestimmt, wobei dieser Abschnitt innerhalb des Messfensters liegt; und
- es wird eine Phasenverschiebung bei einer Grundfrequenz des Frequenzspektrums gemessen.

2. Verfahren nach Anspruch 1, **dadurch gekennzeichnet, dass** die Amplitude des vom Fotodetektor erfassten Signals eingestellt wird.

3. Verfahren nach einem der Ansprüche 1 bis 2, **dadurch gekennzeichnet, dass** separate Messungen der Phasenverschiebung bei unterschiedlichen Abschnitten des Signals zur schnellen Modulation umfassen.

4. Verfahren nach einem der Ansprüche 1 bis 3, bei dem die Phasenverschiebung durch eine Berechnung des komplexen Argumentes der Grundfrequenz gemessen wird.

5. Verfahren nach einem der Ansprüche 1 bis 4, bei dem die langsame Phasenmodulation durch eine Änderung der Brechzahl eines Mediums bewirkt wird.

6. Vorrichtung zur Durchführung des beschriebenen Verfahrens nach Anspruch 1 zum Messen der Phasenverschiebung zweier Lichtstrahlen, die von ein und derselben, einen polarisierten Lichtstrahl abgebenden Quelle (3) abgegeben werden, mit einer optischen Anordnung mit Mitteln zum Erzeugen von zwei Strahlen, die von ein und derselben Lichtquelle abgegeben werden, einem ersten Phasenverschiebungsmittel (5), um bei einem der beiden Strahlen eine verhältnismäßig langsame Phasenänderung zu bewirken, und einem zweiten Phasenverschiebungsmittel (6), um bei einem der beiden Strahlen eine verhältnismäßig schnelle periodische Phasenmodulation zu bewirken, einem Gerät (1) zur Bildung eines Interferenzmusters, das ein Mittel zum Interferieren der beiden Strahlen umfasst, einem Fotodetektor (12) zum Erfassen von Streifen des gebildeten Interferenzbildes aus den beiden Strahlen, **dadurch gekennzeichnet, dass** sie weiterhin umfasst:
- ein Mittel zum laufenden Einstellen einer Periode (TSW) der verhältnismäßig schnellen periodischen Phasenmodulation, sodass ihre Dauer (TW) im Wesentlichen der Dauer eines gewählten Messfensters entspricht; und
- eine Messanordnung (2) mit Mitteln zum Bestimmen eines Frequenzspektrums eines in dem Messfenster gemessenen Abschnittes eines vom Fotodetektor abgegebenen Signals, wobei diese Messanordnung (2) Mittel umfasst zum Messen der bei einer Grundkomponente des Frequenzspektrums auftretenden Phasenänderung.

7. Vorrichtung nach Anspruch 6, **dadurch gekennzeichnet, dass** das Mittel zum laufenden Einstellen der Periode (TSW) ein Rechenmittel ist, das zum Erzeugen eines Korrektursignals die jeweiligen Phasenvorzeichen der Oberwellen und das Vorzeichen der Grundfrequenz kombiniert.

8. Vorrichtung nach einem Ansprüche 6 oder 7, **dadurch gekennzeichnet, dass** sie ein Mittel zur automatischen Einstellung der Verstärkung der vom Fotodetektor (12) abgegebenen Signale aufweist.

9. Vorrichtung zur Interferenzrefraktometrie mit der oben beschriebenen Vorrichtung zum Messen der Phasenverschiebung, bei der die Mittel zum Erzeugen von zwei Strahlen ein Teilungsmittel (4) zum Teilen des von der Quelle abgegebenen Strahls in zwei Strahlen aufweisen, wobei das erste Phasenverschiebungsmittel (5) zum verhältnismäßig langsamen Modulieren der Phase eines der Strahlen im Verhältnis zum anderen mindestens eine ein Medium mit sicher ändernder Brechzahl enthaltende Zelle (MC) umfasst und das zweite Mittel (6) zum verhältnismäßig schnellen Modulieren der Phase eines der beiden Strahlen eine Zelle umfasst, die das Licht unter Einwirkung einer angelegten periodischen elektrischen Modulationsspannung (ST) in Phase verschieben kann, und bei der die Elektronik (2) einen Rechner (15) umfasst, der so programmiert ist, dass er bei den vom Detektor abgegebenen Signalen während eines Zeitintervalls (TW) eine schnelle FourierTransformation (FFT) vornimmt und die bei der Grundschwingung auftretende Phasenverschiebung bestimmt.

10. Vorrichtung nach Anspruch 9, **dadurch gekennzeichnet, dass** sie ein Mittel (14) zum Abtasten und Digitalisieren des verstärkten Signals während eines Erfassungszeitintervalls (TW), einen Generator (20) zur Erzeugung eines periodischen Signals zum Steuern des zweiten Phasenverschiebungsmittels umfasst, und bei der der Rechner (15) so programmiert ist, dass er ein erstes Signal (S1) zur Kontrolle der Verstärkung des Verstärkungsmittels (13) und ein zweites Signal (S2) zum Einstellen der Periode (TSW) des von dem Generator (20) erzeugten Signals in Abhängigkeit von der Dauer (TW) des Erfassungszeitintervalls abgibt.

11. Vorrichtung nach Anspruch 10, **dadurch gekennzeichnet, dass** der Rechner (15) zum Erzeugen eines Korrektursignals die jeweiligen Phasenvorzeichen der Oberwellen und das Vorzeichen der Grundfrequenz kombinieren kann.
